# EUROPÄISCHE PATENTSCHRIFT

(11) **EP 0 982 511 B1**
(45) Veröffentlichungstag und Bekanntmachung des Hinweises auf die Patenterteilung: **02.01.2003**
(21) Anmeldenummer: 98115876.9
(22) Anmeldetag: 22.08.1998
(51) Int. Cl.: F16D 13/64

(54) **Kupplungsscheibe für schaltbare Reibkupplungen**
Coupling disc for friction clutch
Disque d'accouplement pour embrayage à friction

(43) Veröffentlichungstag der Anmeldung: 01.03.2000
(73) Patentinhaber: Raybestos Industrie-Produkte GmbH, 54497 Morbach (DE)
(72) Erfinder: Tscheplak, Thomas, 71384 Weinstadt (DE); Schulz, Norbert, 51709 Marienheide (DE)
(74) Vertreter: Gille Hrabal Struck Neidlein Prop Roos

(56) Entgegenhaltungen:
- DE-A- 4 039 247
- DE-A- 19 622 593
- DE-C- 692 387
- DE-U- 7 827 426
- FR-A- 2 043 008
- FR-A- 2 677 721
- GB-A- 747 234
- US-A- 3 917 043

## Beschreibung

Die Erfindung betrifft eine Kupplungsscheibe für schaltbare Reibkupplungen, wie im Oberbegriff von Patentanspruch 1 angegeben. Eine solche Kupplungsscheibe ist aus DE-U-78 27 426 bekannt. Sie ist verwendbar in sowohl trocken laufenden oder auch naß laufenden Reibkupplungen, wie sie zum Beispiel in Kraftfahrzeugen zwischen Motor und Handschaltgetriebe als Drehzahlwandler oder Drehmomentunterbrecher eingesetzt werden.

Bei der bis heute üblichen Bauweise von Kupplungsscheiben muß bei Ein- und Auskuppeln immer die gesamte Masse der kompletten Kupplungsscheibe auf der Getriebeeingangswelle verschoben werden, wobei die von der Kupplungsdruckplatte eingeleitete oder auch aufgehobene Kraft nur über radiale Umlenkung durch den Torsionsdämpfer erfolgt oder die starre durchgehende Scheibe (beim Zweimassenschwungrad) an der Kupplungsscheibennabe die gewünschte Verschiebewirkung hervorruft.

Bei den bekannten Kupplungsscheiben für schaltbare Reibkupplungen sind die Reibbeläge an Biegefedern, sogenannten Federkissen, angenietet. Diese Federkissen sind wiederum am Torsionsdämpfer oder, wenn dieser, wie zum Beispiel bei der Kupplungsscheibe für eine Reibkupplung, die mit einem sogenannten Zweimassenschwungrad arbeitet, nicht vorgesehen ist, direkt an einer durchgehenden Scheibe befestigt. Torsionsdämpfer wie auch die durchgehende Scheibe sind dann, wie schon erwähnt, wiederum mit der Kupplungsscheibennabe verbunden, die auf dem Vielkeilprofil der Getriebeeingangswelle verschiebbar gleitet.

Der Erfindung liegt die Aufgabe zugrunde, eine Kupplungsscheibe für eine schaltbare Reibungskupplung zu schaffen, bei der die axialen Verschiebeprofile konstruktiv so dicht wie möglich in der Nähe des Reibradius der Kupplungsbeläge liegen, und dadurch die axiale Verschiebung mit geringsten Reibungsverlusten behaftet ist, so daß das tatsächlich zu übertragende Kupplungsmoment dem rechnerisch ermittelten gleichkommt.

Diese Aufgabe wird erfindungsgemäß mit einer Kupplungsscheibenkonstruktion gelöst, welche die Merkmale des Patentanspruches 1 aufweist. Vorteilhafte Ausgestaltungen und Weiterbildungen dieser Kupplungsscheibenkonstruktion sind Gegenstand der Unteransprüche.

Die erfindungsgemäße Kupplungsscheibe ist zweigeteilt. Sie besteht aus einem Grundkörper, der auf der Getriebewelle lösbar axial festgesetzt ist, zum Beispiel mit einer gefederten Kugel, die in eine Umfangsnut der Nabe einrastet. Dieser Grundkörper wird beim Aus- oder Einkuppelvorgang nicht bewegt. Auf diesen Grundkörper sind Belagpaare oder Belagträger mit aufgeklebten Belägen, beispielweise in Form eines Verriegelungslaschenbelages oder in Form eines Klemmhülsenbelages beziehungsweise Klemmspangenbelages aufgeschoben. Nur diese werden beim Betätigen der Schaltkupplung axial bewegt. Damit wird die zu bewegende Masse deutlich verringert.

Das mit Verriegelungslaschen ausgerüstete Reibbelagpaar oder Reibbelagträgerpaar ist vorzugsweise so konzipiert, daß die dazwischenliegenden Kupplungsbelagfedern beim Verriegeln der Beläge oder der Belagträger leicht vorgespannt werden. Damit wird erreicht, daß die Belag- oder mit Belägen beklebte Belagträgereinheit im verriegelten Zustand zugleich beidseitig plangeschliffen und bis zum Einbau im Kupplungsaggregat als Einheit erhalten und transportiert werden kann.

Die Kupplungsbelagfedern sind beispielsweise elastische Stränge oder Schläuche aus temperaturstabilem Kunststoff, wie zum Beispiel Silikon oder metallische Biegeblattbeziehungsweise Torsionsfedern. Auch sogenannte asymmetrische Federkissen können eingesetzt werden, ohne daß diese sich negativ auf die sogenannte Berstfestigkeit der Paarungseinheit auswirken würden.

Werden statt der Reibbeläge mit Verriegelungslaschen Belagträger (mit entsprechendem Verriegelungssystem), auf denen Reibbeläge aufgeklebt sind, verwendet, bestehen die Reibbelagträger zweckmäßig aus Leichtmetall oder Kunststoff, um die zu verschiebende Masse und deren axiales Massenträgheitsmoment so klein wie möglich zu halten.

Die Reibbeläge mit Verriegelungslaschen oder die Reibbelagträger mit Verriegelungslaschen, auf die Reibbeläge aufgeklebt sind, sind vorzugsweise so konstruiert, daß sich diese Teile selbst gegenseitig verriegeln. Im praktischen Betrieb läßt sich somit die Verriegelung nicht lösen, da dies durch die Gleitstege am Kupplungsscheiben-Grundkörper verhindert wird.

Die Kupplungsbeläge können auch so gestaltet sein, daß Belagfedern durch kein Drehmoment belastet werden, um sie so werkstoff- und funktionsmäßig optimieren zu können.

Die erfindungsgemäße Kupplungsscheibe für schaltbare Reibkupplungen ist besonders für den Einsatz in Kupplungen mit geringem Abhub beziehungsweise Lüftspiel, d. h. in sogenannten Low-lift-Kupplungen, geeignet, weil durch das Verriegeln ein Verzug der Paarungseinheit minimiert wird. Außerdem erlaubt diese Konstruktion durch das Überschleifen der Paarung im verriegelten Zustand das Einhalten von so engen Dickentoleranzen und geringen Unwuchten, wie sie bei herkömmlichen Kupplungsscheiben technisch nicht realisierbar sind.

Wenn die Reibbeläge auf verriegelbare Reibbelagträger aufgeklebt sind, benötigen die Reibmaterialien keine teuren Armierungskomponenten wie Garne, Drähte usw. Sind die Belagträger aus Leichtmetall gefertigt, ist eine nahezu temperaturunabhängige Schleuderfestigkeit der Belagträger und der darauf angebrachten Reibbeläge möglich.

Andererseits erlaubt die erfindungsgemäße Kupplungsscheibe einen schnellen Belagwechsel, da nur das zu einer Einheit verriegelte Reibbelagpaar beziehungsweise verriegelte Belagträgerpaar mit aufgeklebten Belägen ausgetauscht zu werden braucht.

Der Einsatz von mit Belägen beklebten Belagträgern ist auch von Seiten der Recycle-Fähigkeit sehr interessant. Die Träger können immer wieder neu mit Reibbelägen beklebt werden. Die Belagträger müssen daher nicht entsorgt werden.

Erfindungsgemäß werden also sowohl für trocken als auch für naß laufende Schaltkupplungen ringscheibenförmige Träger für Reibbeläge oder auch komplette Reibbeläge in Form der Träger vorgeschlagen, welche axial verschiebbar und miteinander zu verriegeln sind.

In der Zeichnung sind zur weiteren Erläuterung der Erfindung zwei Ausführungsbeispiele einer erfindungsgemäßen Kupplungsscheibe für trocken oder auch naß laufende Schaltkupplungen schematisch dargestellt, und zwar zeigt
- Fig. 1: eine schaubildliche Explosionsdarstellung der Kupplungsscheibe nach einer ersten Ausführungsform, wobei die beiden im Betrieb drehfest miteinander verbundenen, jedoch axial zueinander verschiebbaren Teile getrennt dargestellt sind,
- Fig. 2: einen Teilschnitt der Träger für Reibbeläge nach Linie II-II aus Fig. 1 in gegenüber Fig. 1 vergrößertem Maßstab,
- Fig. 3: eine schaubildliche Explosionsdarstellung der Kupplungsscheibe nach einer zweiten Ausführungsform,
- Fig. 4: eine schaubildliche Ansicht einer Ausführungsform für eine Klemmhülse und eine Klemmspange für die Kupplungsscheibe nach Fig. 3 und
- Fig. 5: eine schaubildliche Ansicht einer zweiten Ausführungsform einer Klemmspange und einer Klemmhülse für die Kupplungsscheibe nach Fig. 3.

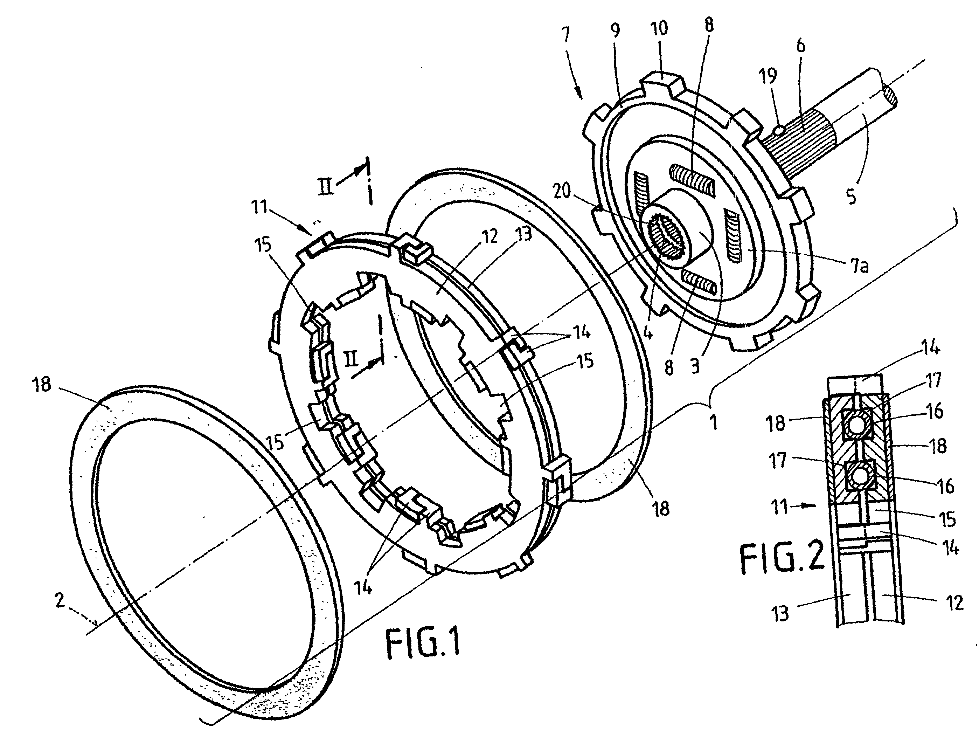

Die in Fig. 1 und 2 dargestellte Kupplungsscheibe 1 besteht im wesentlichen aus zwei koaxial zueinander angeordneten und in Richtung einer Achse 2 gegeneinander verschiebbaren Teilen, die nachstehend näher beschrieben sind.

Der den Grundkörper 7 bildende eine Teil der Kupplungsscheibe 1 weist eine Nabe 3 mit Innenverzahnung 4 auf, welche auf einer zu einem nicht dargestellten Getriebe führenden Welle 5 mit entsprechender Außenverzahnung 6 drehfest und axial durch einen Einrastmechanismus arretiert, zum Beispiel durch eine in der Welle 5 federnd gelagerte Kugel 19 und eine in der Nabe 3 angeordnete Nut 20, angeordnet ist. Auf der Nabe 3 ist ein Druckfedern 8 enthaltender Torsionsdämpfer 7a angebracht. Der Torsionsdämpfer 7a weist eine Scheibe 9 auf, die am Außenumfang mit radial hochstehenden Zungen 10 versehen ist, die als Verankerungs- und Verschiebelement für einen den zweiten Teil der Kupplungsscheibe 1 bildenden Reibbelagträger 11 dienen, welcher nachstehend im einzelnen beschrieben ist.

Der in der Zeichnung gezeigte Reibbelagträger 11 besteht aus zwei Ringscheiben 12 und 13, welche in ihrer Ausführung identisch ausgebildet und spiegelbildlich zueinander angeordnet sind. Diese Ringscheiben 12 und 13 sind am Außenumfang und am Innenumfang mit hakenförmig ausgebildeten Verriegelungselementen 14 versehen, welche durch relatives Verdrehen der aufeinandergelegten Ringscheiben 12 und 13 ineinandergreifen, was insbesondere in Fig. 1 zu erkennen ist. Außerdem enthalten die Ringscheiben 12 und 13 im Innenumfang Ausnehmungen 15, welche in der in Fig. 1 gezeigten Montageposition miteinander fluchten, so daß der zusammengesetzte Reibbelagträger 11 auf den Grundkörper 7 aufgeschoben werden kann, wobei die Zungen 10 der Scheibe 9 des Torsionsdämpfers 7a in die Ausnehmungen 15 des Reibbelagträgers 11 mit Gleit- oder Schiebesitz passen, so daß im Betrieb beim Lüften und beim Einrücken der Kupplung die Reibbelagträger 11 gegenüber dem Grundkörper 7 verschoben werden können und der Grundkörper 7 mit der Nabe 3 stets in seiner Montageposition auf der Welle 5 verbleibt.

Da die Zungen 10 eine Dicke aufweisen, die ausreicht, damit bei der betriebsbedingten axialen Verschiebung der Reibbelagträger 11 beide Ringscheiben 12 und 13 stets im Bereich der Zungen 10 bleiben, ist im Betrieb ein Verdrehen der Ringscheiben relativ zueinander und damit ein Entriegeln nicht zu befürchten, da nicht möglich.

Zwischen den Ringscheiben 12 und 13 sind als Federelemente aus Silikon-Gummi bestehende Schläuche 16 in dort vorgesehene ringförmige Vertiefungen 17 eingelegt, welche, wie Fig. 2 beispielhaft zeigt, einen rechteckigen beziehungsweise quadratischen, also auch kreisrunden oder ovalen Querschnitt aufweisen, während die Schläuche 16 im Querschnitt kreisförmig sind. Durch die unterschiedliche Querschnittsform von Ringnut und Schlauch läßt sich die Federkennung positiv beeinflussen. Auch läßt sich die Federkennung verändern beziehungsweise dem gewünschten Sollwert anpassen, wenn zum Beispiel die Verlegungsnuten nicht zentrische Kreisnuten sind, sondern durch eine andere Nutverteilung, zum Beispiel sinusförmig verlaufende Nutverteilung, vorgenommen wird.

Bei der in Fig. 1 und 2 dargestellten Ausführungsform der Kupplungsscheibe 1 ist auf die Außenseite der Ringscheiben 12 und 13 jeweils eine Reibbelagschicht 18 aufgeklebt. In diesem Fall besteht die Ringscheibe 12 beziehungsweise 13 vorzugsweise aus Leichtmetall wie Aluminium oder auch Kunststoff. Es ist jedoch auch möglich, die Ringscheiben 12 und 13 insgesamt aus Reibmaterial herzustellen,'weil dieses Material im ausgehärteten Zustand ausreichende Festigkeit aufweist.

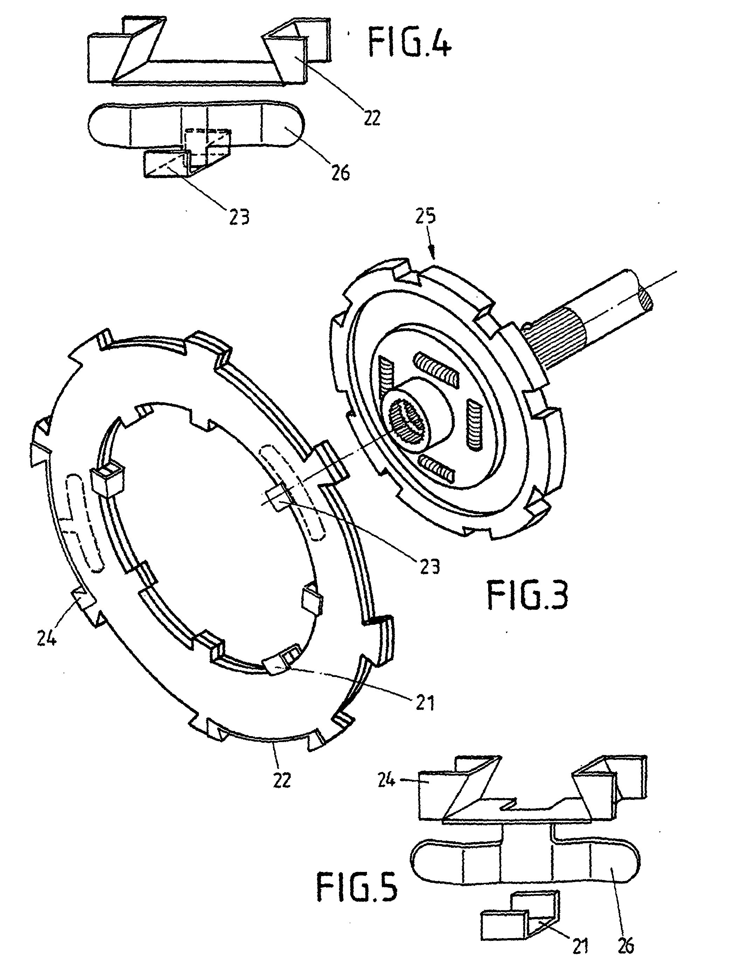

Die Klemmhülsen-/Klemmspangen-Belagkonstruktion nach Fig. 3 bis 5 bewältigt die gleichen Aufgaben wie der Verriegelungsbelag nach Fig 1 und 2. Mit Hilfe der Klemmspangen 22, die am Außenumfang des Kupplungsbelagpaares oder des Kupplungsbelagträgerpaares zwischen die Schwalbenschwanznasen federnd geklemmt werden, werden diese beiden Ringscheiben, zwischen denen dann auch die sogenannte Belagfederung sitzt, miteinander verspannt beziehungsweise am Auseinandergehen in axialer Richtung gehindert. Das Gleiche bewirken die sogenannten Klemmhülsen 21 an der Innenzone der Paarung, indem die Hülsen 21 über die Führungsstege, die das Gleiten des Belagpaares oder Trägerpaares auf dem Grundkörper 25 bewirken, gestülpt werden. Prinzipiell ist jedoch ein Anbringen der Klemmhülsen beziehungsweise Klemmspangen auch in anderer Form denkbar.

Auch bei der Klemmhülsen-/Klemmspangen-Belagkonstruktion können die verschiedensten Belagfederungsarten, sogenannte "Federkissen", schubmomentenfrei montiert und belastet werden. So ist es zum Beispiel möglich, eine metallische Biegefeder 26 direkt mittels Stanz- und Biegetechnik in die sogenannten Klemmhülsen und Klemmspangen zu integrieren (siehe 23 und 24).

Selbstverständlich gilt auch für die Kupplungsscheiben, die mit Klemmhülsen 21 und 23 und mit Klemmspangen 22 und 24 verriegelt sind, das bereits bei den Verriegelungslaschen Gesagte. Natürlich kann dieses Verriegelungssystem auch direkt am Reibbelagpaar beziehungsweise bei aufgeklebten Belägen direkt am Belagträgerpaar eingesetzt werden.

## Patentansprüche

1. Kupplungsscheibe für schaltbare Reibkupplungen, bestehend aus wenigstens einem Belagring oder Reibbelagträger (11), mit aufeinander drückbaren Reibbelägen aus Reibmaterial und einer auf einer Welle anzuordnenden Nabe (3),
**dadurch gekennzeichnet,**
**daß** der wenigstens eine Belagring oder wenigstens eine Reibbelagträger (11) mit aufgeklebtem Reibbelag (18) bzw. zwei gegenseitig verriegelbare bzw. aneinander zu befestigende Reibbelagträger mit aufgeklebten Reibbelägen axial verschiebbar auf einem scheibenförmigen Kupplungsscheibengrundkörper (7) formschlüssig und drehfest mit diesem verbunden angeordnet ist oder sind.

2. Kupplungsscheibe gemäß Anspruch 1, **dadurch gekennzeichnet, daß** zur axialen Federung der Reibbeläge (18) bzw. ihrer Träger (11) beispielsweise aus Kunststoff bestehende Schläuche (16) zwischen die Reibbeläge (18) oder Träger (11) beim Verriegeln derselben eingeklemmt sind.

3. Kupplungsscheibe gemäß Anspruch 1, **dadurch gekennzeichnet, daß** zur axialen Federung der Reibbeläge (18) bzw. ihrer Träger (11) eine endlose metallische Biegefeder (23) oder Torsionsfeder (22), die zwischen die Reibbeläge (18) oder Träger (11) beim Verriegeln derselben eingeklemmt ist, vorgesehen ist.

## Claims

1. Coupling disc for friction clutch consisting of at least one lining collar or a friction lining support (11) comprising compressible friction linings made of a friction material, and further comprising a hub (3) to be mounted on a shaft,
**characterized in that**
said at least one lining ring or said at least one friction lining support (11) including a bonded friction lining (18) or a pair of mutually lockable or interconnected friction lining supports including the bonded friction linings are arranged axially movable on a disc-shaped coupling disc forming an elementary body (7) and are positively and rotatably interlocked with the latter.

2. Coupling disc for friction clutch according to claim 1,
**characterized in that**
for assuring the axial resilience of the friction linings (18) or of their supports (11) tubings (16) consisting for instance of a synthetic material are clamped between the friction linings (18) or supports (11) during the interlocking operation of the latter.

3. Coupling disc for friction clutch according to claim 1,
**characterized in that**
for assuring the axial resilience of the friction linings (18) or of their supports (11) an endless metallic spiral spring (23) or torsion spring (22) mounted between the friction linings (18) or the supports (11) is clamped during the interlocking operation of the latter.

## Revendications

1. Disque d'accouplement pour embrayage à friction consistant au minimum d'un anneau de garniture ou au minimum d'un support de garniture de friction (11), et comprenant des garnitures de friction compressibles réalisées dans un matériau de friction et comprenant également un moyeu (3) pouvant être monté sur un arbre,
**caractérisé en ce que**
ledit seul anneau de garniture ou ledit seul support de garniture de friction (11) pourvu d'une garniture de friction collée (18), respectivement une paire de supports de garnitures mutuellement verouillables ou attachables comprenant des garnitures de friction collées sont prévues axialement déplaçables sur un corps de base formant un disc d'embrayage (7) ayant la forme d'un disque et attaché de façon positive et résistant à la torsion à ce dernier.

2. Disque d'accouplement pour embrayage à friction suivant la revendication 1;
**caractérisé en ce que**
pour assurer l'élasticité axiale des garnitures de friction (18) ou de ses supports (11) des tuyaux (16) réalisés dans une matière synthétique prévus entre les garnitures de friction (18) et les supports (11) sont coinçés entre ces derniers lors de leur verouillage.

3. Disque d'accouplement pour embrayage à friction suivant la revendication 1,
**caractérisé en ce que**
pour assurer l'élasticité axiale des garnitures (18) ou de ses supports (11) il est prévu un ressort spiral sans fin (23) ou un ressort à torsion (22) qui sont serrés entre les garnitures de friction (18) ou le support (11) lors du verrouillage de ces derniers.
